# FASCICULE DE BREVET EUROPEEN

(11) **EP 1 772 604 B1**
(45) Date de publication et mention de la délivrance du brevet: **29.02.2012**
(21) Numéro de dépôt: 06291553.3
(22) Date de dépôt: 04.10.2006
(51) Int. Cl.: F01N 13/14, F01N 13/16, B60R 13/08, F16L 59/08

(54) **Ecran de protection thermique et acoustique d'un composant de véhicule**
Wärme- und Schallschutzschirm eines Fahrzeugbauteils
Heat and sound protection screen of a vehicle component

(30) Priorité: 07.10.2005 FR 0553052
(43) Date de publication de la demande: 11.04.2007
(73) Titulaire: Centre d'étude et de recherche pour l'automobile (CERA), 51100 Reims (FR)
(72) Inventeur: Choquart, Francois, 51100 Reims (FR); LEMAIRE, Dominique, 08190 Villiers Devant Le Thour (FR); Grignon, Guillaume, 51500 Sillery (FR); LANFRANCHINI, Jean-Luc, 51100 REIMS (FR)
(74) Mandataire: Sayettat, Julien Christian

(56) Documents cités:
- EP-A- 1 186 760
- WO-A-03/021096
- WO-A-2004/107314
- DE-A1- 19 720 537
- US-A- 3 948 295
- US-A- 5 603 297
- US-B1- 6 749 929
- L. UYTTERHAEGHE, P. PERDOUX: "Design and Realization fo High Specific E Modulus Structural Parts" SAE CONFERENCE, vol. SAE, 29 septembre 1998 (1998-09-29), XP002390724 Detroit
- PATENT ABSTRACTS OF JAPAN vol. 1997, no. 01, 31 janvier 1997 (1997-01-31) & JP 08 232676 A (YAMAKAWA IND CO LTD), 10 septembre 1996 (1996-09-10)
- C. KNOBELSDORF, T. REUSSMANN: "Herstellung nachverformbarer Vliesstoff/Duromer-Halbzeuge für die Verbundtechnologie" HOFER VLIESSTOFF-TAGE, [Online] 9 novembre 2005 (2005-11-09), - 10 novembre 2005 (2005-11-10) XP002390770 Extrait de l'Internet: URL:http://www.hofer-vliesstofftage.de/vor traege_2005.htm> [extrait le 2006-07-26]
- "DATENBLÄTTER ZU FASERWERKSTOFFEN aus Baumwolle-Phenol oder Glasmatte-Polyester mit Kunststoff/Harz als Festiger" DATENBLÄTTER ZU FASERWERKSTOFFEN, [Online] 18 juillet 2006 (2006-07-18), XP002390771 Extrait de l'Internet: URL:http://www.elektro-isola.com/sheets_de tail.asp?country=de&page=Products&product= 50&productView=5> [extrait le 2006-07-26]

## Description

L'invention concerne un écran de protection thermique et acoustique d'un composant de véhicule automobile; vis-à-vis de la ligne d'échappement dudit véhicule, un ensemble de ligne d'échappement de véhicule automobile comprenant un tel écran et un procédé de réalisation d'un tel écran.

Le composant de véhicule automobile peut notamment être un tunnel, un réservoir de carburant ou une paroi de sol d'un compartiment à bagages.

Il est connu de réaliser un écran de protection thermique et acoustique d'un composant de véhicule automobile comprenant, associées en superposition entre elles:
- une couche fibreuse thermo-compressée comprenant des fibres liées entre elles, ladite couche présentant des propriétés d'absorption du bruit, par exemple issu du moteur du véhicule, et d'isolation thermique,
- une feuille d'aluminium, dont la fonction est de réfléchir la chaleur issue de la ligne d'échappement du véhicule.

Un tel écran est monté sur le véhicule de sorte que la feuille d'aluminium soit en regard de la ligne d'échappement.

Un tel écran doit présenter une rigidité suffisante pour pouvoir être manipulé et monté aisément sur le véhicule, et aussi pour garder sa forme au cours de son utilisation.

Pour y parvenir, il est connu d'utiliser une feuille d'aluminium d'épaisseur importante, par exemple de 700 micromètres environ, servant de support à la couche fibreuse qui est insuffisamment rigide. Ladite feuille est emboutie en plusieurs passes, au moyen d'outils spécifiques, avant d'être associée à la couche fibreuse. Il en résulte l'utilisation d'un matériel important, une complexité de réalisation et donc un coût de réalisation important. En outre, du fait de l'épaisseur importante de l'aluminium, l'écran obtenu présente un surpoids, préjudiciable en terme de consommation en carburant du véhicule.

WO 03/021096 A1 décrit un écran de protection avec deux couches et une feuille d'aluminium de 50 à 500 µm, le première couche étant une mousse et la deuxième couche étant fibreuse.

L'invention a pour but de proposer un écran de protection thermique et acoustique rigide, de réalisation simplifiée et de poids diminué, qui présente par ailleurs des caractéristiques de protection acoustique et thermique satisfaisantes vis-à-vis de l'intérieur du véhicule.

A cet effet, et selon un premier aspect, l'invention propose un écran de protection thermique et acoustique d'un composant de véhicule automobile comprenant, associées en superposition entre elles, une couche fibreuse thermo-compressée de fibres liées entre elles et une première feuille d'aluminium, ladite couche étant agencée pour présenter un module de traction compris entre 9 et 90 MPa, une résistivité au passage de l'air comprise entre 27000 et 71000 N.s.m⁻⁴ et une conductivité thermique comprise entre 0,055 et 0,061 W.m⁻¹.K⁻¹ à 200°C et ladite première feuille présentant une épaisseur comprise entre 70 et 150 micromètres.

Dans une telle réalisation, du fait de la faible épaisseur de la feuille d'aluminium, la rigidité de l'écran en flexion est essentiellement apportée par la couche fibreuse.

En outre, la couche fibreuse présente une résistance au passage de l'air suffisamment faible pour réaliser une absorption correcte du bruit issu du moteur, se propageant entre l'écran et le composant, et une conductivité thermique suffisamment faible pour limiter le transfert de chaleur depuis la ligne d'échappement vers le composant du véhicule.

Il convient de souligner ici la nécessité de réaliser un compromis entre ces diverses exigences, la rigidité de la couche fibreuse étant fonction de la compression appliquée qui, lorsqu'elle est trop importante, défavorise l'efficacité acoustique, ladite couche n'étant plus assez épaisse et poreuse, et défavorise aussi la protection thermique, la transmission de chaleur par conduction à travers ladite couche étant augmentée.

De ce fait, l'invention résulte d'une optimisation des caractéristiques de la couche fibreuse, afin de satisfaire à ces diverses exigences.

Selon un deuxième aspect, l'invention propose un ensemble de ligne d'échappement de véhicule automobile comprenant un composant et un tel écran.

Selon un troisième aspect, l'invention propose un procédé de réalisation d'un tel écran.

D'autres particularités et avantages de l'invention apparaîtront dans la description qui suit, faite en référence aux figures jointes dans lesquelles :
- la figure 1 est une représentation schématique en coupe partielle d'un écran selon l'invention,
- la figure 2 est une représentation schématique en coupe partielle de l'écran de la figure 1 selon une réalisation de l'invention, l'écran étant disposé contre la paroi d'un composant,
- la figure 3 est une représentation schématique en coupe partielle de l'écran selon une autre réalisation de l'invention, l'écran étant disposé contre la paroi d'un composant,
- la figure 4 est une représentation schématique en coupe partielle de l'écran selon une autre réalisation de l'invention, l'écran étant disposé contre la paroi d'un composant,

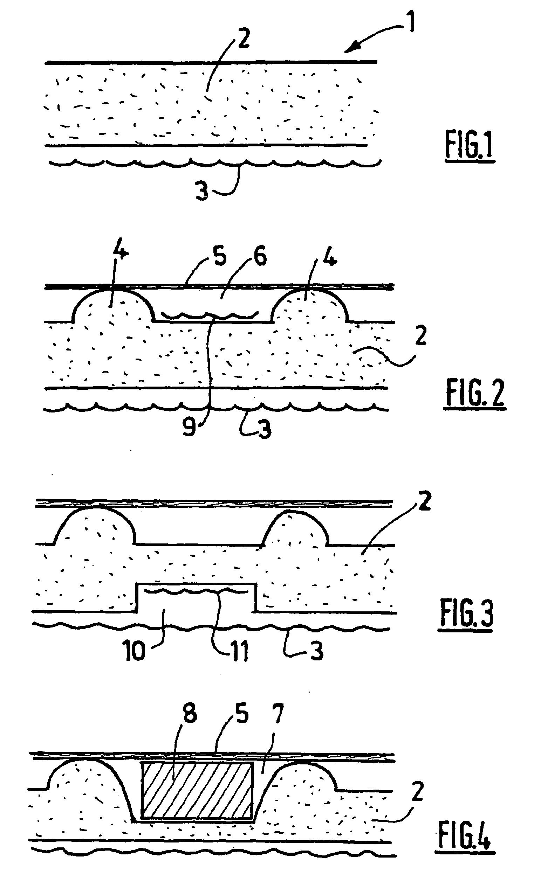

En référence à la figure 1, on décrit à présent un écran 1 de protection thermique et acoustique d'un composant de véhicule automobile comprenant, associées en superposition entre elles:
- une couche fibreuse 2 thermo-compressée de fibres, par exemple des fibres de verre ou de roche, liées entre elles, par exemple par de la résine phénolique,
- une première feuille 3 d'aluminium.

La couche fibreuse 2 présente un module de traction compris entre 9 et 90 MPa, ce qui lui confère une rigidité satisfaisante pour sa manipulation, son montage et sa tenue à l'usage. Elle est obtenue par thermo-compression d'un matériau fibreux.

Sa résistivité au passage de l'air est comprise entre 27000 et 71000 N.s.m⁻⁴, de sorte à absorber de façon satisfaisante le bruit issu du moteur.

Sa conductivité thermique à 200°C est comprise entre 0,055 et 0,061 W.m⁻¹.K⁻¹, de sorte à réaliser une protection thermique suffisante.

Le pourcentage en poids de résine se situe typiquement entre 5 et 15%, et notamment à 10% environ.

La première feuille 3 présente une épaisseur comprise entre 70 et 150 micromètres, une telle épaisseur ne requérant pas qu'elle soit mise en forme au préalable, par plusieurs passes sur des outils coûteux, avant association à la couche fibreuse 2. Sa mise en forme est alors directement effectuée pendant la thermo-compression de la couche fibreuse 2. En variante, elle peut toutefois être effectuée après la thermo-compression de la couche fibreuse 2, la première feuille 3 étant introduite dans l'outillage après ladite étape de thermo-compression et étant mise en forme par ladite couche fibreuse une fois rigidifiée par thermo-compression. Une telle réalisation permet, dans certains cas, d'obtenir une géométrie plus précise de la première feuille 3.

Il en résulte une simplification de réalisation. En outre, la masse de l'écran 1 est diminuée, ce qui est favorable en terme de consommation en carburant du véhicule.

Le choix d'une épaisseur située dans la fourchette haute de valeurs permet de conférer à l'écran 1 une bonne résistance à l'encontre des gravillons projetés lors du roulement du véhicule.

On notera enfin que la première feuille 3, notamment pour les épaisseurs les plus importantes, contribue dans une faible mesure à la rigidité de l'écran 1.

Les caractéristiques choisies pour l'écran 1 résultent d'un compromis choisi en fonction des performances techniques attendues sur chacun des points suivants : rigidité, protection acoustique, protection thermique.

Selon une réalisation donnant un compromis satisfaisant :
- la couche fibreuse 2 est agencée pour présenter un module de traction compris entre 20 et 25 MPa, une résistivité au passage de l'air comprise entre 45000 et 50000 N.s.m⁻⁴ et une conductivité thermique comprise entre 0,057 et 0,059 W.m⁻¹.K⁻¹ à 200°C
- la première feuille 3 présente une épaisseur comprise entre 125 et 135 micromètres.

La couche fibreuse 2 utilisée dans une telle réalisation présente généralement une masse surfacique comprise entre 700 et 1000 g/m² et une épaisseur généralement comprise entre 8 et 15 mm, c'est-à-dire sur la majorité de l'écran 1, certaines zones pouvant toutefois faire l'objet d'une épaisseur plus faible ou plus importante, résultant d'une compression plus ou moins forte.

Selon une réalisation non représentée, l'écran 1 comprend en outre une sous-couche de non-tissé, ladite sous-couche étant associée en superposition à la couche fibreuse 2 à l'opposé de la première feuille 3. Une telle sous-couche, de masse surfacique comprise par exemple entre 10 et 25 g/m², notamment de l'ordre de 15 g/m² a pour fonction de permettre un démoulage aisé de l'écran 1 après l'opération de thermo-compression. Elle peut avoir aussi une fonction de protection de l'écran 1 vis-à-vis des fluides.

Selon une réalisation, représentée par exemple en figure 4, la couche fibreuse 2 présente des zones de densité variable, obtenues par compression différenciée, l'épaisseur pouvant notamment varier de 3 à 20 mm, les zones de plus fine épaisseur pouvant correspondre à des points de fixation, requérant une rigidité forte, et les zones d'épaisseur plus importante pouvant apporter, localement, des propriétés de protection acoustique et thermique améliorées. De telles zones peuvent être disposées a proximité des points les plus chauds de la ligne d'échappement, en particulier à proximité du pot catalytique.

Selon une réalisation, représentée en figure 2, l'écran 1 comprend au moins deux bossages 4, disposés à l'opposé de la première feuille 3 et agencés de sorte à permettre la création d'un espace entre ledit écran et la paroi du composant 5 sur lequel il est destiné à être monté. Cet espace forme une couche d'air 6 entre l'écran 1 et la paroi du composant 5. Un tel agencement permet d'apporter une protection thermique améliorée, la couche d'air 6 jouant une fonction d'isolant thermique.

Selon la réalisation représentée en figure 2, une deuxième feuille 9 d'aluminium est associée à l'écran entre deux bossages 4 successifs. La deuxième feuille 9, du fait de son interposition entre la couche fibreuse 2 et le composant 5, améliore la protection thermique.

Selon une réalisation, représentée en figure 4, une zone de la couche fibreuse 2 comprise entre deux bossages 4 est sur-compressée, de sorte à former un volume 7 suffisant pour y disposer un bloc de matériau souple 8, afin de former un système d'isolation de type masse-ressort. La masse est formée par ladite couche fibreuse revêtue de la première feuille 3 d'aluminium et le ressort par ledit bloc de matériau souple.

Selon une réalisation, représentée en figure 3, l'écran 1 comprend au moins un logement 10 disposé entre la première feuille 3 et la couche fibreuse 2, ledit logement contenant de l'air, comme représenté, ou un matériau à haute résistance thermique, non représenté, ceci afin d'améliorer la protection thermique.

Selon la réalisation représentée en figure 3, le logement 10 est revêtu, sur sa face définie par la couche fibreuse, d'une troisième feuille 11 d'aluminium, qui renforce la protection thermique.

On décrit à présent, de façon non représentée, un ensemble de ligne d'échappement de véhicule automobile comprenant un composant et un écran selon l'invention. le composant 5 et l'écran 1 comprennent des moyens d'association réciproques. Selon une réalisation, au moins une partie de la périphérie de l'écran proche du moteur est plaquée contre le composant de sorte à empêcher la pénétration du bruit issu dudit moteur entre l'écran 1 et le composant 5.

Un procédé de réalisation d'un écran selon l'invention comprend les étapes suivantes :
- disposer dans un moule de thermo-compression une première feuille (3) d'aluminium et la recouvrir de matériau fibreux,
- réaliser la thermo-compression de l'ensemble, de sorte à, simultanément, mettre en forme la première feuille 3 d'aluminium, comprimer la couche fibreuse 2 et associer ladite première feuille à ladite couche fibreuse.

On s'affranchit ainsi d'une étape d'emboutissage préalable en plusieurs passes, ceci du fait de la faible épaisseur de la première feuille 3 qui est mise en forme directement lors de la thermo-compression, ou immédiatement après cette opération dans le même outillage.

On peut disposer, au dessus du matériau fibreux, une sous-couche de non-tissé, de masse surfacique comprise par exemple entre 10 et 25 g/m², ceci de sorte à faciliter le démoulage de l'écran 1.

Les diverses réalisations présentées, relatives notamment à des agencements particuliers de la géométrie de l'écran, sont applicables à tout écran comprenant, associées en superposition entre elles, une couche fibreuse thermo-compressée de fibres liées entre elles et une première feuille d'aluminium, indépendamment des caractéristiques de ladite première feuille et de ladite couche fibreuse.

A cet effet, l'invention concerne aussi un écran de protection thermique et acoustique d'un composant de véhicule automobile comprenant, associées en superposition entre elles, une couche fibreuse thermo-compressée de fibres liées entre elles et une première feuille d'aluminium, la couche fibreuse présentant des zones de densité variable, obtenues par compression différenciée.

A cet effet, l'invention concerne aussi un tel écran comprenant au moins deux bossages, disposés à l'opposé de la première feuille d'aluminium et agencés de sorte à permettre la création d'un espace entre ledit écran et la paroi du composant sur lequel il est destiné à être monté, ledit espace formant une couche d'air.

A cet effet, l'invention concerne aussi un tel écran comprenant deux bossages successifs entre lesquels est associée une deuxième feuille d'aluminium.

A cet effet, l'invention concerne aussi un tel écran dont une zone de la couche fibreuse comprise entre deux bossages est sur-compressée, de sorte à former un volume suffisant pour y disposer un bloc de matériau souple, afin de former un système d'isolation de type masse-ressort, la masse étant formée par ladite couche fibreuse revêtue de la première feuille d'aluminium et le ressort par ledit bloc de matériau souple.

A cet effet, l'invention concerne aussi un tel écran comprenant au moins un logement disposé entre la première feuille et la couche fibreuse, ledit logement contenant de l'air ou un matériau à haute résistance thermique.

A cet effet, l'invention concerne aussi un tel écran comprenant au moins un logement disposé entre la première feuille et la couche fibreuse, le logement étant revêtu, sur sa face définie par la couche fibreuse, d'une troisième feuille d'aluminium.

## Revendications

1. Ecran (1) de protection thermique et acoustique d'un composant de véhicule automobile, vis à vis de la ligne d'échappement, comprenant, associées en superposition entre elles:
• une couche fibreuse (2) thermo-compressée de fibres liées entre elles,
• une première feuille (3) d'aluminium,
ledit écran étant **caractérisé en ce que** :
• ladite couche est agencée pour présenter un module de traction compris entre 9 et 90 MPa, une résistivité au passage de l'air comprise entre 27000 et 71000 N.s.m⁻⁴ et une conductivité thermique comprise entre 0,055 et 0,061 W.m⁻¹.K⁻¹ à 200°C,
• ladite première feuille présente une épaisseur comprise entre 70 et 150 micromètres.

2. Ecran selon la revendication 1, **caractérisé en ce que** :
• la couche fibreuse (2) est agencée pour présenter un module de traction compris entre 20 et 25 MPa, une résistivité au passage de l'air comprise entre 45000 et 50000 N.s.m⁻⁴ et une conductivité thermique comprise entre 0,057 et 0,059 W.m⁻¹.K⁻¹ à 200°C,
• la première feuille (3) présente une épaisseur comprise entre 125 et 135 micromètres.

3. Ecran selon la revendication 2, **caractérisé en ce que** la couche fibreuse (2) présente une masse surfacique comprise entre 700 et 1000 g/m² et une épaisseur généralement comprise entre 8 et 15 mm.

4. Ecran selon l'une quelconque des revendications 1 à 3, **caractérisé en ce qu'**il comprend en outre une sous-couche de non-tissé, ladite sous-couche étant associée en superposition à la couche fibreuse (2) à l'opposé de la première feuille (3).

5. Ecran selon l'une quelconque des revendications 1 à 4, **caractérisé en ce que** la couche fibreuse (2) présente des zones de densité variable, obtenues par compression différenciée.

6. Ecran selon l'une quelconque des revendications 1 à 5, **caractérisé en ce qu'**il comprend au moins deux bossages (4), disposés à l'opposé de la première feuille (3) d'aluminium et agencés de sorte à permettre la création d'un espace entre ledit écran et la paroi du composant (5) sur lequel il est destiné à être monté, ledit espace formant une couche d'air (6).

7. Ecran selon la revendication 6, **caractérisé en ce qu'**une deuxième feuille (9) d'aluminium lui est associée entre deux bossages (4) successifs.

8. Ecran selon la revendication 6, **caractérisé en ce que** une zone de la couche fibreuse (2) comprise entre deux bossages (4) est sur-compressée, de sorte à former un volume (7) suffisant pour y disposer un bloc de matériau souple (8), afin de former un système d'isolation de type masse-ressort, la masse étant formée par ladite couche fibreuse (2) revêtue de la première feuille (3) d'aluminium et le ressort par ledit bloc de matériau souple.

9. Ecran selon l'une quelconque des revendications 1 à 8, **caractérisé en ce qu'**il comprend au moins un logement (10) disposé entre la première feuille et la couche fibreuse, ledit logement contenant de l'air ou un matériau à haute résistance thermique.

10. Ecran selon la revendication 9, **caractérisé en ce que** le logement (10) est revêtu, sur sa face définie par la couche fibreuse (2), d'une troisième feuille (11) d'aluminium.

11. Ensemble de ligne d'échappement de véhicule automobile comprenant un composant (5) et un écran (1) selon l'une quelconque des revendications précédentes, ledit composant et ledit écran comprenant des moyens d'association réciproques, au moins une partie de la périphérie dudit écran proche du moteur étant plaquée contre ledit composant de sorte à empêcher la pénétration du bruit issu dudit moteur entre ledit écran et ledit composant.

12. Procédé de réalisation d'un écran (1) selon l'une quelconque des revendications 1 à 10, comprenant les étapes suivantes :
• disposer dans un moule de thermo-compression une première feuille (3) d'aluminium et la recouvrir de matériau fibreux,
• réaliser la thermo-compression de l'ensemble, de sorte à, simultanément, mettre en forme ladite première feuille d'aluminium, comprimer la couche fibreuse (2) et associer ladite première feuille à ladite couche fibreuse.

## Claims

1. Thermal and acoustic protection screen (1) for a motor vehicle component, in relation to the exhaust pipe, comprising, associated so as to be superimposed on each other:
- a thermocompressed fibrous layer (2) of fibres connected to one another,
- a first aluminium sheet (3),
said screen being **characterised in that**:
- said layer is arranged to have a modulus of tension of between 9 and 90 MPa, a resistivity to the passage of air of between 27,000 and 71,000 N.s.m⁻⁴ and a thermal conductivity of between 0.055 and 0.061 W.m⁻¹. K⁻¹ at 200°C,
- said first sheet has a thickness of between 70 and 150 micrometres.

2. Screen according to claim 1, **characterised in that**:
- the fibrous layer (2) is arranged to have a modulus of tension of between 20 and 25 MPa, a resistivity to the passage of air of between 45,000 and 50,000 N.s.m⁻⁴ and a thermal conductivity of between 0.057 and 0.059 W.m⁻¹.K⁻¹ at 200°C,
- the first sheet (3) has a thickness of between 125 and 135 micrometres.

3. Screen according to claim 2, **characterised in** the fibrous layer (2) has a weight per surface area of between 700 and 1,000 g/m² and a thickness generally between 8 and 15 mm.

4. Screen according to any one of claims 1 to 3, **characterised in that** it also comprises a non-woven sublayer, said sublayer being associated so as to be superimposed on the fibrous layer (2) opposite to the first sheet (3).

5. Screen according to any one of claims 1 to 4, **characterised in that** the fibrous layer (2) has areas of variable density, obtained by differentiated compression.

6. Screen according to any one of claims 1 to 5, **characterised in that** it comprises at least two protrusions (4), disposed opposite the first aluminium sheet (3) and arranged so as to enable a space to be created between said screen and the wall of the component (5) on which it is intended to be mounted, said space forming a layer of air (6).

7. Screen according to claim 6, **characterised in that** a second aluminium sheet (9) is associated therewith between two successive protrusions (4).

8. Screen according to claim 6, **characterised in that** an area of the fibrous layer (2) lying between two protrusions (4) is supercompressed, so as to form a sufficient volume (7) in order to arrange therein a block of flexible material (8), so as to form an isolation system of the mass/spring type, the mass being formed by said fibrous layer (2) covered with the first aluminium sheet (3) and the spring by said block of flexible material.

9. Screen according to any one of claims 1 to 8, **characterised in that** it comprises at least one housing (10) disposed between the first sheet and the fibrous layer, said housing containing air or a material with high thermal resistance.

10. Screen according to claim 9, **characterised in that** the housing (10) is covered, on the face thereof defined by the fibrous layer (2), with a third aluminium sheet (11).

11. Motor vehicle exhaust pipe assembly comprising a component (5) and a screen (1) according to any one of the preceding claims, said component and said screen comprising reciprocal association means, at least part of the periphery of said screen close to the engine being pressed against said component so as to prevent entry of the noise issuing from said engine between said screen and said component.

12. Method of producing a screen (1) according to any one of claims 1 to 10, comprising the following steps:
- disposing a first aluminium sheet (3) in a thermocompression mould and covering it with fibrous material,
- effecting the thermocompression of the assembly, so as to simultaneously shape said first aluminium sheet, compress the fibrous layer (2) and associate said first sheet with said fibrous layer.

## Patentansprüche

1. Schirm (1) zum thermischen und akustischen Schutz einer Komponente eines Kraftfahrzeugs gegen die Abgasleitung, umfassend, untereinander verbunden in Überlagerung:
- eine thermisch komprimierte Faserschicht (2) aus untereinander verbundenen Fasern,
- eine erste Folie (3) aus Aluminium,
wobei der Schirm **dadurch gekennzeichnet ist, dass**:
- die Schicht angeordnet ist, um eine Bruchfestigkeit zwischen 9 und 90 MPa, einen spezifischen Widerstand gegen den Luftdurchlass zwischen 27000 und 71000 N.s.m⁻⁴ und eine thermische Leitfähigkeit zwischen 0,055 und 0,061 W.m⁻¹.K⁻¹ bei 200 °C aufzuweisen,
- die erste Folie eine Dicke zwischen 70 und 150 Mikrometer aufweist.

2. Schirm nach Anspruch 1, **dadurch gekennzeichnet, dass**:
- die Faserschicht (2) angeordnet ist, um eine Bruchfestigkeit zwischen 20 und 25 MPa, einen spezifischen Widerstand gegen den Luftdurchlass zwischen 45000 und 50000 N.s.m⁻⁴ und eine thermische Leitfähigkeit zwischen 0,057 und 0,059 W.m⁻¹.K⁻¹ bei 200 °C aufzuweisen,
- die erste Folie (3) eine Dicke zwischen 125 und 135 Mikrometer aufweist.

3. Schirm nach Anspruch 2, **dadurch gekennzeichnet, dass** die Faserschicht (2) ein Flächengewicht zwischen 700 und 1000 g/m² und eine Dicke aufweist, die im Allgemeinen zwischen 8 und 15 mm liegt.

4. Schirm nach einem der Ansprüche 1 bis 3, **dadurch gekennzeichnet, dass** er außerdem eine Unterschicht aus Vlies umfasst, wobei die Unterschicht in Überlagerung mit der Faserschicht (2) gegenüber der ersten Folie (3) verbunden ist.

5. Schirm nach einem der Ansprüche 1 bis 4, **dadurch gekennzeichnet, dass** die Faserschicht (2) Bereiche mit variabler Dichte aufweist, die durch eine differenzierte Kompression erhalten werden.

6. Schirm nach einem der Ansprüche 1 bis 5, **dadurch gekennzeichnet, dass** er mindestens zwei Höcker (4) umfasst, die gegenüber der ersten Folie (3) aus Aluminium angeordnet und angebracht sind, um die Bildung eines Raums zwischen dem Schirm und der Wand der Komponente (5) zu ermöglichen, auf der er montiert werden soll, wobei der Raum eine Luftschicht (6) bildet.

7. Schirm nach Anspruch 6, **dadurch gekennzeichnet, dass** eine zweite Folie (9) aus Aluminium zwischen zwei aufeinander folgenden Höckern (4) mit ihm verbunden ist.

8. Schirm nach Anspruch 6, **dadurch gekennzeichnet, dass** ein Bereich der Faserschicht (2) zwischen zwei Höckern (4) aufgeladen ist, um ein Volumen (7) zu bilden, das ausreichend ist, um darin einen Block aus flexiblem Material (8) anzuordnen, um ein Isolationssystem des Typs Masse-Feder zu bilden, wobei die Masse von der Faserschicht (2), verkleidet mit der ersten Folie (3) aus Aluminium und die Feder aus dem Block aus flexiblem Material gebildet ist.

9. Schirm nach einem der Ansprüche 1 bis 8, **dadurch gekennzeichnet, dass** er mindestens ein Lager (10) umfasst, das zwischen der ersten Folie und der Faserschicht angebracht ist, wobei das Lager Luft oder ein Material mit hoher thermischer Beständigkeit enthält.

10. Schirm nach Anspruch 9, **dadurch gekennzeichnet, dass** das Lager (10) auf seiner Seite, die durch die Faserschicht (2) definiert ist, mit einer dritten Folie (11) aus Aluminium verkleidet ist.

11. Einheit der Abgasleitung eines Kraftfahrzeugs, umfassend eine Komponente (5) und einen Schirm (1) nach einem der vorhergehenden Ansprüche, wobei die Komponente und der Schirm umgekehrte Mittel zur Verbindung umfassen, wobei mindestens ein Teil des Umfangs des Schirms nahe am Motor gegen die Komponente plattiert ist, um das Eindringen des Lärms, der vom Motor stammt, zwischen den Schirm und die Komponente zu verhindern.

12. Verfahren zur Herstellung eines Schirms (1) nach einem der Ansprüche 1 bis 10, umfassend die folgenden Schritte:
- Anordnen in einer Form zur thermischen Kompression einer ersten Folie (3) aus Aluminium und Bedecken dieser mit Fasermaterial,
- Durchführen der thermischen Kompression der Einheit, um gleichzeitig die erste Folie aus Aluminium zu formen, die Faserschicht (2) zu komprimieren und die erste Folie mit der Faserschicht zu verbinden.
